# EUROPEAN PATENT SPECIFICATION

(11) **EP 1 019 259 B1**
(45) Date of publication and mention of the grant of the patent: **26.02.2003**
(21) Application number: 97926616.0
(22) Date of filing: 20.05.1997
(51) Int. Cl.: B60C 15/00, B60C 15/06, B60C 11/02

(54) **TIRE WITH REVERSED CARCASS PLY TURNUP CONFIGURATION**
REIFEN MIT UMGEKEHRTER KONFIGURATION DES KARKASSENSCHICHTENUMSCHLAGES
PNEU A STRUCTURE DE RETOURNEMENT DE PLI DE CARCASSE INVERSEE

(43) Date of publication of application: 19.07.2000
(73) Proprietor: THE GOODYEAR TIRE & RUBBER COMPANY, Akron, Ohio 44309-3531 (US)
(72) Inventor: RAYMAN, William, Earl, Hartville, OH 44632 (US)
(74) Representative: Leitz, Paul
(86) International application number: US9708537
(87) International publication number: WO98052777

(56) References cited:
- EP-A- 0 206 679
- FR-A- 1 124 766
- GB-A- 1 322 281
- US-A- 3 224 482
- US-A- 4 609 023

## Description

### TECHNICAL FIELD

This invention relates to pneumatic tires with track belts and more particularly to an improved removable track belt pneumatic tire constructed of a removable track belt mounted on an improved radially reinforced beaded tire carcass that is typically for use with earthmoving vehicles.

### BACKGROUND OF THE INVENTION

The track belt pneumatic tires of the present invention are generally designed for use on large earthmover vehicles and are subjected to high stress and loads under harsh environmental conditions such as in rock quarries, mines, foundries, and other areas where tires are subjected to puncture-producing and wear-inducing conditions.

As discussed in U.S. 4,351,380, certain prior art track belt tire assemblies comprise a plurality of ground-engaging shoes spaced about the periphery of the supporting structure. The heavy loads on the shoes result in great stresses being developed that sometimes lead to premature tire failure. The 4,351,380 patent is directed to an improved track belt assembly which comprise a plurality of shoes spaced about the periphery of a load-supporting structure and secured to a reinforcing belt structure disposed on the side of the shoe opposite the ground-engaging side thereof.

U.S. 3,224,482 (corresponding to the preamble of claim 1) describes a removable tread tire, with circumferential ribs and grooves and inextensible reinforcement cords, wherein the primary purpose is to provide for transversal bending of the tread belt for improved riding comfort and road holding ability. This is achieved through the use of transversal bending of the reinforcement structure, and with specified cord angles in the fabric strips in the tread ring.

The large pneumatic tires, which are typically used for earthmoving vehicles, sometimes fail due to the high stress and loads caused by the harsh environmental conditions in which they are operated. These large prior art pneumatic tires had a greater tendency to fail in one of three tire locations or areas than because of other sources of failure. The first problem area was that the turnup end of the ply would sometimes break through the sidewall of the tire. A second problem area was a tire failure in the bead area. The third problem area was a tendency to fail in the crown and/or shoulder area of the tire.

In the prior art, conventional solutions to these problems include increasing the gauge of the sidewall to increase the bending stiffness, increasing bead area stiffness and robustness, and decreasing tire deformation under load by increasing the sidewall stiffness. To further improve tire durability, the ply turnup portion of tires was typically reinforced.

In US-A- 4 609 023 having a common assignee with the present invention, the sidewall inserts were incorporated in the tire carcass to allow the ply structure to conform to is natural shape when the tire is inflated.

GB-A- 1 322 281 discloses a pneumatic vehicle tire having a carcass formed of a single ply of parallel steel wires which are wrapped around bead cores and pass axially inward around the cores, so that therefore free ends of the steel wires thus terminate facing the tire cavity.

With the continual drive to improve earthmover performance, there is a continuing need to provide novel tire designs for improving earthmover tire durability. The present invention is directed to an improved pneumatic tire and removable track belt assembly with which the frequency of premature tire failure is thought to be substantially reduced. The present invention is also directed to providing an improved pneumatic tire and track belt assembly which is designed to allow large tires to be transported in several sections and then assembled at the construction site to ease the otherwise difficult problem of transporting the large tires, i.e. sometimes over 13 feet (4m) in height and 8,000 to 15,000 pounds (3.629 to 6804 kg). Moreover, the present invention relates to an improved pneumatic tire and removable track belt assembly with which the driving characteristics of the tire can be more economically changed and the inventory of the number of tire spares that are typically needed can be reduced.

### OBJECTS AND SUMMARY OF THE INVENTION

It is an object of the present invention to provide an improved tire and removable track belt assembly for an earthmover vehicle wherein the frequency of premature tire failure has been substantially reduced.

A further object of the present invention is to provide an improved tire and removable track belt assembly wherein the belt is constructed with a unique carcass ply turnup to strengthen ' the tire in the bead area.

Still another object of the present invention is to provide an improved tire and removable track belt assembly with a unique turnup ply construction in the tire carcass that reduces the likelihood of tire failure caused by factors such as: a)one of the turnup ends of the carcass ply breaking through a sidewall of the tire; b)failure of the tire in the bead area; and c)failure of the tire in the upper shoulder area of one of the sidewalls.

In accordance with the invention there is provided a pneumatic tire as recited in the claims.

### BRIEF DESCRIPTION OF THE DRAWINGS

Fig. 1 is a cross-sectional view illustrating the invention where the carcass ply turns up axially inward about a bead wire;
Fig. 2 is an enlarged, cross-sectional view illustrating one side or half of the symmetrical tire shown in Fig. 1 and made in accordance with the present invention; and
Fig. 3 is an enlarged, cross-sectional view illustrating the turnup portion of the tire carcass shown in Fig. 2.

### DEFINITIONS

"Apex" means a non-reinforced elastomer positioned radially about a bead core.

"Aspect *ratio" of* the tire means the ratio of its section height (SH) to its section width (SW) multiplied by 100% for expression as a percentage.

"Axial" and "axially" means lines or directions that are parallel to the axis of rotation of the tire.

"Bead" means that part of the tire comprising an annular tensile member wrapped by the ply cords and shaped, with or without other reinforcement elements such as flippers, chippers, apexes, toe guards and chafers, to fit the design rim.

"Belt or breaker reinforcing structure" means at least two layers of plies of parallel cords, woven or unwoven, underlying the tread, unanchored to the bead, and having both left and right cord angles in the range from 17 degrees to 33 degrees with respect to the equatorial plane of the tire.

"Bias ply tire" means a tire having a carcass with reinforcing cords in the carcass ply extending diagonally across the tire from bead core to bead core at 25°-50° angle with respect to the equatorial plane of the tire. Cords run at opposite angles in alternate layers.

"Circumferential" means lines or directions extending along the perimeter of the surface of the annular tread perpendicular to the axial direction.

"Chafers" refers to narrow strips of material placed around the outside of the bead to protect cord plies from degradation and chaffing caused by movement of the rim against the tire.

"Chippers" means a reinforcement structure located in the bead portion of the tire.

"Cord" means one of the reinforcement strands of which the plies in the tire are comprised.

"Equatorial plane (EP)" means the plane perpendicular to the tire's axis of rotation and passing through the center of its tread.

"Flipper" means a reinforced fabric wrapped about the bead core and apex.

"Footprint" means the contact patch or area of contact of the tire tread with a flat surface under load and pressure.

"Inner liner" means the layer or layers of elastomer or other material that form the inside surface of a tubeless tire and that contain the inflating gas or fluid within the tire.

"Net-to-gross ratio" means the ratio of the tire tread rubber that makes contact with the road surface while in the footprint, divided by the area of the tread in the footprint, including non-contacting portions such as grooves.

"Nominal rim diameter" means the diameter of the rim base at the location where the bead wire of the tire seals.

"Normal inflation pressure" refers to the specific design inflation pressure at a specific load assigned by the appropriate standards organization for the service condition for the tire.

"Normal load" refers to the specific load at a specific design inflation pressure assigned by the appropriate standards organization for the service condition for the tire.

"Ply" means a continuous layer of rubber-coated parallel cords.

"Radial and "radially" means directions extending radially toward or away from the axis of rotation of the tire.

"Radial-ply tire" means a belted or circumferentially-restricted pneumatic tire in which the ply cords which extend from bead to bead are laid at cord angles between 65° and 90° with respect to the equatorial plane of the tire.

"Section height (SH)" means the radial distance from the nominal rim diameter to the outer diameter of the tire at its equatorial plane.

### DETAILED DESCRIPTION OF THE INVENTION

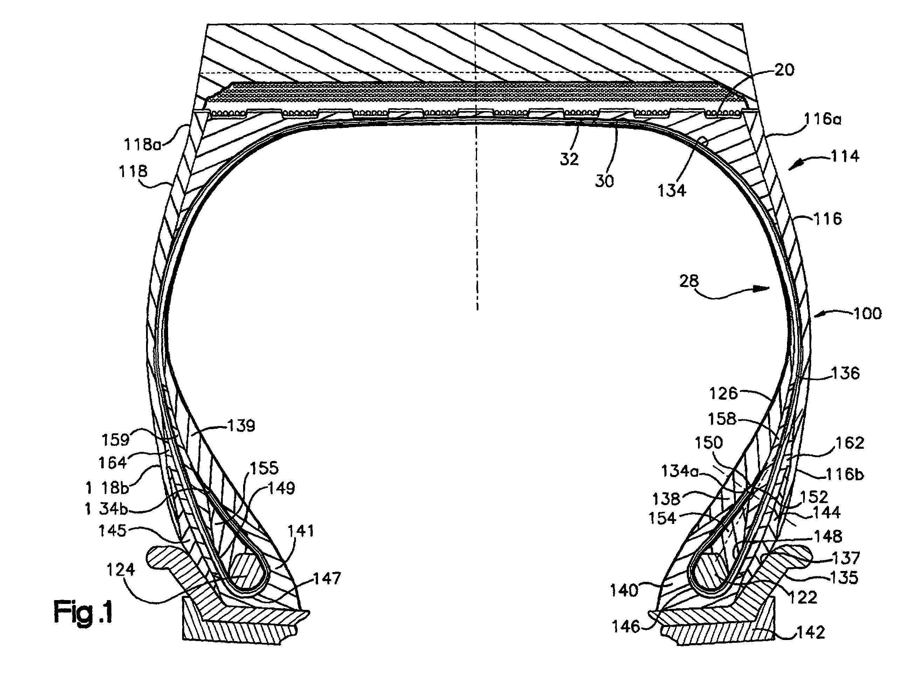

With reference to Fig. 1, there is illustrated a cross-section of track belt pneumatic tire 100 which in the specific embodiment illustrated is a size 60/80R63 and/or a 70/68R63 earthmover tire. The size 60/80R63 tire has a 162 inch (411.48 cm) maximum inflated outside diameter, a 60.00 inch (152.40 cm) maximum inflated width tire in the axial directions, and a nominal bead diameter of 63 inches (160.02 cm). The size 70/68R63 tire has a 162 inch (411:45 cm) maximum inflated outside diameter, a 70.0 inch (177.80 cm) maximum inflated width tire in the axial directions, and a nominal bead diameter of 63 inches. (160.02 cm). The tires are typically inflated to a pressure of about 100 pounds per square inch (psi) (689 kPa) with air and sometimes with an air/nitrogen mixture.

The track belt pneumatic tire 100 includes a ground engaging, circumferentially extending track belt 112 mounted on a radially reinforced, beaded tire carcass 114. The beaded tire carcass 114 generally includes a pair of tire sidewalls 116,118 extending radially inwardly from the outer circumferential surface 120 of the tire carcass and terminating at their radial extremities in a pair of bead wires 122, 124, respectively. The sidewalls 116, 118 each have an upper portion 116a, 118a respectively, in the shoulder region of tire carcass 114 and radially outward of the maximum section width of the tire carcass, and a lower portion 116b, 118b, respectively, adjacent the bead wires 122,124, respectively, and radially inward of the maximum section width of the tire carcass 114. The details of the construction of tire carcass 114 are described in detail hereinafter.

### TIRE CARCASS

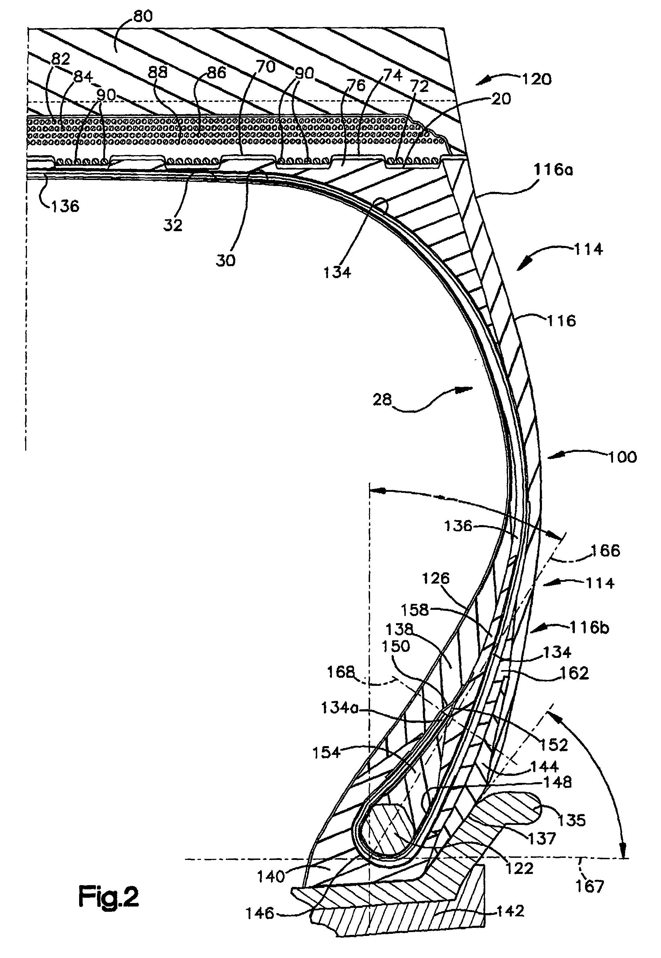

Referring Figs. 1 and 2, the details of tire carcass 114 are illustrated. The axially inward surface 128 is a inner ply liner 126 which forms an innerliner that holds the air pressure for inflating tire 100. The inner ply liner 126 covers the entire interior facing surface 128 of the tire carcass 114 and serves to hold the air within the carcass that is used to inflate tire 100. Fabric barrier plies 130 and 132 are provided within the tire carcass 114 in the area of the curved portion of interior surface 128 to provide support for the upper portion of the barrier rubber layer 136 and prevent the barrier rubber from being squeezed through the ply wires in the ply layer 134. While two barrier plies 130 and 132 are illustrated, it is within the terms of the invention to use between one and four barrier plies, as needed for a specific design.

### Track Belt

The ground engaging, circumferentially extending track belt 112 is removably mounted onto the tire carcass 114. As best shown in Fig. 2, the underside or inner circumference surface 70 of track belt 112 comprises a plurality of annular lands 72 and grooves 74 that mate with lands 76 and grooves 120 of tire carcass 114 to restrain belt 112 from lateral or axial movement with respect to the carcass 114. The tire track belt 112 includes a tread portion 80 and a plurality of tread belts 82, 84, 86, and 88 (82-88). While four tread belts 82-88 are illustrated, is it within the scope of the invention to use other numbers of tread plies as needed. The combination of a removable tire track belt with a tire carcass for use with large earthmoving vehicles is important in that it enables a portion of a tire to be replaced instead of the entire tire in the event that one portion of the tire, i.e., the tire belt or the tire carcass, wears out before the other part. Also, it may be desirable to have different types of tread designs such as for example driving or steering tread designs. This feature allows for a less expensive means of changing the tire tread to construct the appropriate style of desired tire. This feature would greatly reduce the cost of storing spare tires and could even extend the operating time of the tires.

Zero degree wires 90 encircle the tire tread and are provided to restrict the radially outward growth of the tread belt 112 due to a serious deflection in the tire carcass. By keeping the tire tread from expanding radially outward, the tire treads will maintain a more flat tread profile which will improve tread life and durability. It will also provide many layers of wire that will provide cut and penetration protection. The positioning of the zero degree wires 90 within the annular lands 72 of the tire tread 112 has two additional advantages. First, when the tire tread belt is being installed on the tire carcass, the tire carcass is inflated and forced outward so that its lands 76 are pressed into the annular grooves 74 disposed about the inner surface of the tire tread belt 112. In the same way, the lands 72 of the tread belt which contain the zero degree wires 90 are pressed into the grooves 120 of the tire carcass 114. However, since the wires 90 prevent the annular lands 72 from expanding radially outward from the crown of the tire carcass 114, the lands 76 are pressed into the grooves 74 formed in the tire belt 112. Since the tire belt can expand slightly more in the areas without the zero degree wires 90, the annular lands 76 have a tendency to press deeper into annular grooves 74 to better support the tire belt 112 on the tire carcass 114. While the zero degree wires 90 are illustrated as being in the annular lands 72, it is also within the scope of the invention to include an additional layer of zero degree wire cable embedded in the belt between the grooves 74 and the tread belts 82-88.

### TURNUP PLY

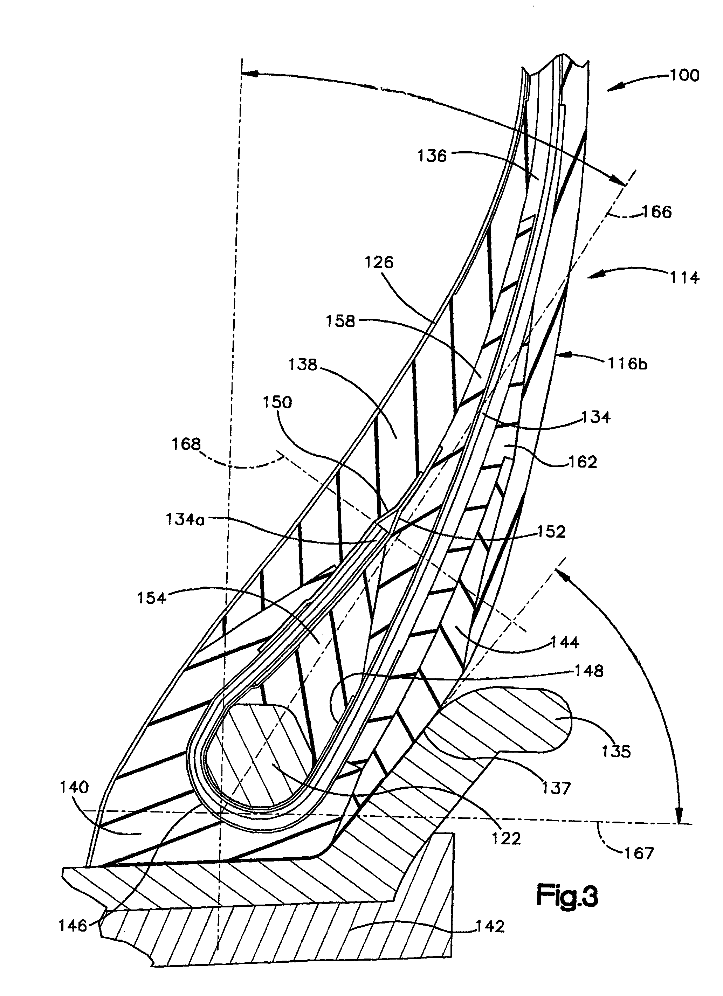

The tire carcass, such as tire carcass 114, according to the invention as illustrated in Figs. 1, 2 and 3, includes in its construction at least one rubberized laminated ply layer 134 of tire cord fabric which extends radially inwardly from the outer circumferential surface 110 of the tire carcass, also called the crown area of the tire carcass, and has turnup ends 134a and 134b which wrap or loop around bead wires 122 and 124, respectively. Although the carcass ply 134 is shown as being of single ply construction, a multi-ply construction can be employed if desired. Preferably, the carcass ply 134 is made of a rubberized ply of steel cord, but it can be made of a non-steel carcass reinforcing material. The location of the turnup ends 134a and 134b with respect to the flange 135 of the tire mounting rim 142 and the bead wires 122 and 124, respectively, is a significant aspect of the invention and will be discussed in more detail below.

Between the innerliner 126 and the ply layer 134 is a barrier rubber layer 136 which backs up the entire length of ply layer 134 and is formed of a soft compound of rubber which squeezes against the ply layer 134. Annular stiffeners, known as apex elements or just apexes 138,139 herein, each having a generally triangular shape are provided radially outward of the bead wires 122,124, respectively, and between the barrier rubber 136, the innerliner 126 and the turnup ply 134. The apexes 138, 139 extend from approximately the mid-sidewall and the area of innerliner 126 radially outward from the bead wires 122, 124, respectively, for stiffening the bead areas to restrain the tire from bending over the flange 135. Axially inward from apexes 138,139 and between the ply layer 134 where it turns up about bead wires 122,124 are located lower gum chafers 140, 141, respectively, that support the bead wires 122, 124, respectively, in the area of the wheel mounting rim 142 and to prevent chafing of the tire by an adjacent wheel mounting rim. Upper gum chafers 144, 145 are disposed against the lower gum chafers 140, 141, respectively, and the lower tire sidewalls 116b, 118b, respectively, to provide support for the bead wires 122, 124 in the area of the flange 135 and to prevent chafing of the tire by an adjacent wheel mounting rim.

Between the lower chafers 140, 141 and the rubber barrier 136 in the area partially surrounding bead wires 122, 124 are located wire chafer plies 146, 147 that support the bead wires 122, 124, respectively. As best seen in Figs. 1, 2 and 3, the wire chafer plies 146, 147 are primarily disposed against the inner facing surfaces of lower chafers 140, 141. Between the inner surface of ply layer 134 and the bead wires 122 and 124 are located flippers 148, 149, respectively, which are reinforced fabric materials that are wrapped about the bead core and at least a portion of one of the apexes. On either side of the ends 134a, 134b of ply layer 134 are two wire coat, gum layers 150 and 152 which cover the ends 134a; 134b, respectively, of ply 134 and enable the movement of ply 134 between the gum layers 150 and 152 without exposing the wire within ply 134 during tire construction or severe bending of the tire.

### APEX CONFIGURATION

Two annular stiffeners, referred to as apexes or apex elements 154, 155 herein, each having a generally four sided shape, are provided radially outward of the bead wires 122, 124, respectively, between flippers 148,149, and out to apexes 158, 159, for stiffening the area about the bead wires 122, 124, respectively, to help prevent the tire from bending over the flange 135 of the wheel rim 142. The apexes 154, 155 are further disposed between the lower inner end of rubberized ply layer 134 and the turn up ends 134a and 134b. Abutted against and extending radially outward from the apexes 154 and 155 are two annular stiffeners, referred to herein as apexes 158 and 159, respectively, which help support the ends 134a and 134b of rubberized ply layer 134. The apexes 154, 155, are constructed of a relatively hard compound having a modulus of 12.2 - 14.9 megapascals/cm² at 200% elongation. Axially inward from the apexes 154 and 155 are the inner apexes 138 and 139, respectively. Axially outward from the apexes 154 and 155 are the outer apexes 162 and 164, respectively. The apexes 138, 139, 158, 159, and 162, 164 are generally constructed of the same relatively soft rubber compound having a modulus of 7.2 - 8.8 megapascals/cm² at 200% elongation and act to provide a soft cushion that absorbs the stresses around the turn up ends 134a and 134b of the ply layer 134 which is caused by stress forces generated by the flexing of the tire. While the apexes 138, 139, 158, 159, and 162, 164 are typically constructed of the same rubber compound, it is within the terms of the invention to construct one or more of the apexes with a different modulus within the range of 7.2 - 8.8 megapascals/cm² at 200%. In the preferred embodiment, the apexes 138, 139, 158, 159, 162 and 164 are softer than the apexes 154 and 155 which are located directly adjacent and radially outward from the bead wires 122 and 124, respectively. Preferably the rubber compound used to form the apexes 154 and 155 is 20% to 50%, and preferably 20% to 50% stiffer than the rubber compound used to form apexes 138, 139, 158, 159, 162 and 164.

### LOCATION OF PLY TURNUP ENDS

The location of the carcass ply turnup ends 134a and 134b are an important aspect of the present invention. Preferably, the turnup ends 124a, 134b are located radially outward. They are looped axially inward of the bead wires 122, 124. This is an improvement of great importance because the pressure of the tire pressing the bead area of the tire carcass 114 against the flange 135 actually causes the ply ends 134a, 134b to press against the portion of the carcass ply leading axially downward from the crown of the carcass to the bead wires 122, 124. This pressing causes a force which tends to prevent radial movement of the ply ends 134a, 134b. This in turn tends to added extra support to the sidewalls which helps prevent them from moving in the axially outward directions. Also the bead area around the bead wires 122, 124 is strengthen and the tendency for rotational movement of the bead wires is reduced because of the effect from pressing the ply ends 134a, 134b against the portion of the carcass ply 134 leading axially downward from the crown of the carcass to the bead wires 122, 124.

Another innovation with the design illustrated in Figs. 1. 2 and 3 is that the turnup ends 134a, 134b are located a distance of between 2 and 3 bead diameters from the intersection of a centerline 166 which extends through the center of bead wire 122, 124 and a line 167 which is tangent to the most radially inward surface of the carcass ply 134 where the carcass ply turn up end portions 134a, 134b loop around the wire beads 122, 124 to a line 168 which is perpendicular to centerline 166 and is tangent to the outer ends of the carcass ply layer 134. This location of the outer ends of the turnup ends 134a, 134b of ply layer 134 is important because the pressure exerted against the ply end was sometimes sufficient to cause the ply end to break through the sidewall in prior art constructions where the turnup end extends closer to the center of the tire sidewall. The advantage of having the turnup ends 134a, 134b of carcass ply 134 at a lower position closer to the radial outward edge of the flange 135 is so that when operating conditions cause the tire to deflect outwards, the ends 134a, 134b of the ply layer 134 will be supported by the ply 134 and the flange 135. The overall beneficial effect of the looped axially inward ply layer ends 134a, 134b is a greatly reduced possibility that the turnup ends 134a, 134b will penetrate axially outwards through the sidewall of the tire carcass 114.

While Figs. 1, 2 and 3 illustrate a specific configuration of apexes 138, 139, 154, 155, 158, 159, 162, 164, flippers 148, 149, as well as other generally common carcass elements as shown, the looped axially inward ply layer ends 134a, 134b can be incorporated in a radial ply tire with any configuration of apexes, flippers, and other common carcass elements, as required for the specific type of radial tire. While a track belt pneumatic tire 100 with a tire track belt 120 mounted onto the tire carcass 114 can be constructed with looped axially inward ply layer turnup ends 134a, 134b, it is also within the terms of the invention to incorporate the looped axially inward ply layer turnup ends into a pneumatic tire, such as for example the pneumatic tire shown in US-A- 4,609,023.

Moreover, while the present invention of incorporating the looped axially inward ply layer turnup ends into a pneumatic tire, such as for example large pneumatic tires suitable for mounting on earthmoving vehicles, it is also within the terms of the invention to incorporate the inward turnup ply ends for a pneumatic tire suitable for any type of vehicle including but not exclusive truck, automotive, commercial and residential vehicles.

### NATURAL PLY LINE OF ALTERNATIVE EMBODIMENTS

The natural ply line of ply layer 134 follows the natural ply line, which means it is already at its natural shape upon inflation. The carcass ply 134 retains its natural shape when inflated, thereby reducing the inflation strain on the tire. The portion of the ply layer 134 extending down to the beads 122, 124 is equally supported along its length by the axially interior surface 137 of rim flange 135 which is substantially parallel to the centerline 166 passing through the center of beads 122 and 124.

Throughout the specification the term rubber compound means any elastomeric compound.

## Claims

1. A pneumatic tire (100) having a pair of spaced apart bead wires (122,124), an inflatable, multi-layered tire carcass (114) with at least one ply layer including at least a first carcass ply (134), the first carcass ply (134) embedded within the tire carcass (114) and extending entirely about the circumference of the tire carcass and having first and second turnup ends (134a,134b), a pair of sidewall portions (116/118) extending from the bead wires (122,124) to the outer circumferential surface of the tire carcass (114) and a removable tread belt assembly (120) mounted to the outer circumferential surface of the inflatable tire carcass (114), the tire **characterized in that** the tire is an earthmover type tire, **in that** the turnup ends (134a,134b) extend axially inwards and are turned up about the bead wires (122,124) and **in that** first, second, third, and fourth apex elements are disposed about each of the bead wires (122,124), the first (154,155) of the apex elements being located adjacent and radially outward from each of the bead wires (122,124), the second (158,159) of the apex elements being located adjacent and radially outwards from the first (154,155) of the apex elements and between a section of the first carcass ply (134) leading from the circumference of the tire carcass to the bead wires (122,124) and a section of the first and second turnup ends (134a,134b) of the carcass ply (134), the third (138,139) of the apex elements being located axially between an innerliner (126) and the first and second turnup ends (134a,134b) and extending radially outward from the bead wires (122,124) to approximately the middle of the sidewalls (116,118), and the fourth (162,163) of the apex elements being located axially between the axially outermost carcass ply (134) and upper gum chafers (144,145).

2. The pneumatic tire of claim 1 further **characterized by** the outermost ends of the first and second turnup ends (134a,134b) being located radially outward at a distance equal to between 2 and 3 times the diameters of the bead wires (122,124) as measured from the intersection of a centerline (166) extending through the center of bead wires (122,124) and a line (167) tangent to the most radially inward surface of the carcass ply (134) where the carcass ply turnup portions (134a,134b) loop around the wire beads (122,124) to a line (168) perpendicular to the centerline (166) and tangent to the outer ends of the turnup ends (134a,134b) of the carcass ply (134).

3. The pneumatic tire of claim 1 **characterized in that** the first (154,155) apex is constructed of a first elastomer which is stiffer than a second elastomer from which the second (158,159), third (138,139) and fourth (162,164) of the apex elements are constructed.

4. The pneumatic tire of claim 3 **characterized in that** the first (154,155) apex element is constructed of the first elastomer that is at least 20% to 50% stiffer than the second elastomer from which the second (158,159), third (138,139) and fourth (162,164) of the apexes are constructed.

5. The pneumatic tire of claim 1 **characterized in that** it has an interlocking structure (20,70,72,74,76) to secure the removable tread belt assembly (120) to the inflatable tire carcass (114).

6. The pneumatic tire of claim 5 **characterized in that** the interlocking structure includes interlocking belt structure (72,74) on the inner surface (70) of the removable tread belt assembly (120) for engaging a complementary interlocking support structure (20,76) on the outer circumferential surface of the tire carcass (114).

7. The pneumatic tire of claim 6 **characterized in that** the interlocking tread structure comprises a plurality of circumferentially extending lands (72) and grooves (74); and the interlocking support structure comprises a plurality of circumferentially extending lands (76) and grooves (20) oriented to engage complementary ones of the circumferentially extending lands (72) and grooves (74) on the inner surface (70) of the removable tread belt assembly (120) to prevent axial movement of the removable tread belt assembly (120) with respect to the outer circumferential periphery of the tire carcass (114).

8. The pneumatic tire of claim 1 **characterized in that** the removable tread belt assembly (120) includes a ground contacting tread portion (80) on the outer surface thereof and a plurality of circumferentially extending lands (72) and grooves (74) oriented to prevent axial movement of the removable tread belt assembly (120) with respect to the outer circumferential periphery of the tire carcass (114).

9. The pneumatic tire of claim 1 **characterized in that** when the tire is inflated and mounted on a flange having an axially inner surface (137) at an angle (YY) less than 90 degrees, the centerline (166) of the first carcass ply layer (134) follows the natural un-inflated ply centerline, and is substantially parallel to the flange's axially inner surface (37).

## Patentansprüche

1. Luftreifen (100) mit einem Paar beabstandeter Wulstdrähte (122, 124), einer aufpumpbaren mehrschichtigen Reifenkarkasse (114), wobei wenigstens eine Lagenschicht wenigstens eine erste Karkasslage (134) enthält, die in die Reifenkarkasse (114) eingebettet ist, sich um den gesamten Umfang der Reifenkarkasse erstreckt und erste und zweite umgeschlagene Enden (134a, 134b) besitzt, einem Paar Seitenwandabschnitte (116, 118), die sich von den Wulstdrähten (122, 124) zur äußeren Umfangsfläche der Reifenkarkasse (114) erstrecken, und einer abnehmbaren Laufstreifengürtel-Baueinheit (120), die an der äußeren Umfangsfläche der aufpumpbaren Reifenkarkasse (114) montiert ist, wobei der Reifen **dadurch gekennzeichnet ist, dass** er ein Reifen für Erdbewegungsmaschinen ist, dass sich die umgeschlagenen Enden (134a, 134b) axial nach innen erstrecken und um die Wulstdrähte (122, 124) nach oben umgeschlagen sind, und dass erste, zweite, dritte und vierte Kernreiterelemente um jeden der Wulstdrähte (122, 124) angeordnet sind, wobei die ersten Kernreiterelemente (154, 155) an jeden der Wulstdrähte (122, 124) angrenzen und sich radial außerhalb hiervon befinden, die zweiten Kernreiterelemente (158, 159) an die ersten Kernreiterelemente (154, 155) angrenzen und sich radial außerhalb hiervon und zwischen einem Abschnitt der ersten Karkasslage (134), der vom Umfang der Reifenkarkasse zu den Wulstdrähten (122, 124) führt, und einem Abschnitt der ersten und zweiten umgeschlagenen Enden (134a, 134b) der Karkasslage (134) befinden, die dritten Kernreiterelemente (138, 139) sich in axialer Richtung zwischen einem Innerliner (126) und den ersten und zweiten umgeschlagenen Enden (134a, 134b) befinden und sich von den Wulstdrähten (122, 124) radial nach außen ungefähr bis zur Mitte der Seitenwände (116, 118) erstrecken, und die vierten Kemreiterelemente (162, 163) sich in axialer Richtung zwischen der axial äußersten Karkasslage (134) und oberen Gummiwulstbändern (144, 145) befinden.

2. Luftreifen nach Anspruch 1, ferner **dadurch gekennzeichnet, dass** sich die äußersten Enden der ersten und zweiten umgeschlagenen Enden (134a, 134b) in einem Abstand radial außerhalb befinden, der gleich dem 2- bis 3fachen Durchmesser der Wulstdrähte (122, 124) ist, gemessen vom Schnittpunkt einer Mittellinie (166), die durch die Mitte der Wulstdrähte (122, 124) verläuft, mit einer Linie (167), die tangential zur radial innersten Oberfläche der Karkasslage (134) ist, wo die Karkasslagenumschlagabschnitte (134a, 134b) um die Wulstdrähte (122, 124) bis zu einer Linie (168) geschlungen sind, die zur Mittellinie (166) senkrecht und zu den äußeren Enden der umgeschlagenen Enden (134a, 134b) der Karkasslage (134) tangential ist.

3. Luftreifen nach Anspruch 1, **dadurch gekennzeichnet, dass** der erste Kernreiter (154, 155) aus einem ersten Elastomer gebildet ist, das steifer als ein zweites Elastomer ist, aus dem die zweiten (158, 159), dritten (138, 139) und vierten (162, 164) Kernreiterelemente gebildet sind.

4. Luftreifen nach Anspruch 3, **dadurch gekennzeichnet, dass** das erste Kernreiterelement (154, 155) aus dem ersten Elastomer gebildet ist, das wenigstens um 20 % bis 50 % steifer als das zweite Elastomer ist, aus dem die zweiten (158, 159), dritten (138, 139) und vierten (162, 164) Kernreiter gebildet sind.

5. Luftreifen nach Anspruch 1, **dadurch gekennzeichnet, dass** er eine Verriegelungsstruktur (20, 70, 72, 74, 76) besitzt, die die abnehmbare Laufstreifengürtel-Baueinheit (120) an der aufpumpbaren Reifenkarkasse (114) fixiert.

6. Luftreifen nach Anspruch 5, **dadurch gekennzeichnet, dass** die Verriegelungsstruktur eine Verriegelungsgürtelstruktur (72, 74) auf der inneren Fläche (70) der abnehmbaren Laufstreifengürtel-Baueinheit (120) enthält, die mit einer komplementären Verriegelungsunterstützungsstruktur (20, 76) auf der äußeren Umfangsfläche der Reifenkarkasse (114) in Eingriff gelangen kann.

7. Luftreifen nach Anspruch 6, **dadurch gekennzeichnet, dass** die Verriegelungslaufstreifenstruktur mehrere in Umfangsrichtung verlaufende Stege (72) und Rillen (74) umfasst; und die Verriegelungsunterstützungsstruktur mehrere in Umfangsrichtung verlaufende Stege (76) und Rillen (20) umfasst, die so orientiert sind, dass sie mit komplementären der in Umfangsrichtung verlaufenden Stege (72) und Rillen (74) auf der inneren Fläche (70) der abnehmbaren Laufstreifengürtel-Baueinheit (120) in Eingriff gelangen, um eine axiale Bewegung der abnehmbaren Laufstreifengürtel-Baueinheit (120) in Bezug auf den äußeren Umfang der Reifenkarkasse (114) zu verhindern.

8. Luftreifen nach Anspruch 1, **dadurch gekennzeichnet, dass** die abnehmbare Laufstreifengürtel-Baueinheit (120) auf ihrer äußeren Oberfläche einen den Boden berührenden Laufstreifenabschnitt (80) sowie mehrere in Umfangsrichtung verlaufende Stege (72) und Rillen (74) umfasst, die so orientiert sind, dass sie eine axiale Bewegung der abnehmbaren Laufstreifengürtel-Baueinheit (120) in Bezug auf den äußeren Umfang der Reifenkarkasse (114) verhindern.

9. Luftreifen nach Anspruch 1, **dadurch gekennzeichnet, dass** dann, wenn der Reifen aufgepumpt und an einem Horn mit einer axial inneren Oberfläche (137) unter einem Winkel (YY) von weniger als 90 Grad montiert ist, die Mittellinie (166) der ersten Karkasslagenschicht (134) der natürlichen Lagenmittellinie im nicht aufgepumpten Zustand folgt und zu der axial inneren Oberfläche (37) des Horns im Wesentlichen parallel ist.

## Revendications

1. Bandage pneumatique (100) possédant une paire de fils d'acier de la tringle (122, 124) espacés les uns des autres, une carcasse de bandage pneumatique multicouche gonflable (114) comprenant au moins une couche de nappes englobant au moins une première nappe de carcasse (134), la première nappe de carcasse (134) étant enrobée dans la carcasse de bandage pneumatique (114) et s'étendant complètement autour de la circonférence de la carcasse du bandage pneumatique et possédant des première et deuxième extrémités de retournement vers le haut (134a, 134b), une paire de portions de flancs (116/118) s'étendant depuis les fils d'acier de la tringle (122, 124) jusqu'à la surface circonférentielle externe de la carcasse de bandage pneumatique (114) et un assemblage amovible de ceinture de bande de roulement (120) monté sur la surface circonférentielle externe de la carcasse de bandage pneumatique gonflable (114), le bandage pneumatique étant **caractérisé en ce que** le bandage pneumatique est un bandage pneumatique de type génie civil, **en ce que** les extrémités de retournement vers le haut (134a, 134b) s'étendent en direction axiale vers l'intérieur et en tour, en étant orientées vers le haut, les fils d'acier de la tringle (122, 124), et **en ce que** des premier, deuxième, troisième et quatrième éléments de bourrages sur tringles sont disposés autour de chacun des fils d'acier de la tringle (122, 124), les premiers éléments de bourrages sur tringles (154, 155) étant disposés en position adjacente et à l'extérieur, en direction radiale, de chacun des fils d'acier de la tringle (122, 124), les deuxièmes éléments de bourrages sur tringles (158, 159) étant disposés en position adjacente et à l'extérieur, en direction radiale, des premiers éléments de bourrages sur tringles (154, 155) et entre une section de la première nappe de carcasse (134) menant de la circonférence de la carcasse de bandage pneumatique aux fils d'acier de la tringle (122, 124) et une section des première et deuxième extrémités de retournement vers le haut (134a, 134b) de la nappe de carcasse (134), les troisièmes éléments de bourrages sur tringles (138, 139) étant disposés, en direction axiale, entre un calandrage intérieur (126) et les première et deuxième extrémités de retournement vers le haut (134a, 134b), et s'étendant à l'extérieur, en direction radiale, des fils d'acier de la tringle (122, 124) jusque approximativement le milieu des flancs (116, 118), et les quatrièmes éléments de bourrages sur tringles (162, 163) étant disposés en direction axiale entre la nappe de carcasse (134) située le plus à l'extérieur en direction axiale et des protège bout de talon supérieurs en gomme (144, 145).

2. Bandage pneumatique selon la revendication 1, **caractérisé en outre par le fait que** les extrémités des première et deuxième extrémités de retournement vers le haut (134a, 134b) situées le plus à l'extérieur sont disposées, en direction radiale, vers l'extérieur, à une distance égale à une valeur entre deux et trois fois le diamètre des fils d'acier de la tringle (122, 124), telle qu'on la mesure à partir de l'intersection d'une médiane (166) s'étendant en passant par le centre des fils d'acier de la tringle (122, 124) et une ligne (167) tangente à la surface de la nappe de carcasse (134) située le plus à l'intérieur en direction radiale, à l'endroit où les portions de retournement de nappes de carcasse (134a, 134b) s'enroulent en boucle autour des fils d'acier de la tringle (122, 124), jusqu'à une ligne (168) perpendiculaire à la médiane (166) et tangente aux extrémités externes des extrémités de retournement vers le haut (134a, 134b) de la nappe de carcasse (134).

3. Bandage pneumatique selon la revendication 1, **caractérisé en ce que** les premiers bourrages sur tringles (154, 155) sont construits à partir d'un premier élastomère qui est plus rigide que le deuxième élastomère à partir duquel on construit les deuxièmes éléments de bourrages sur tringles (158, 159), les troisièmes éléments de bourrages sur tringles (138, 139) et les quatrièmes éléments de bourrages sur tringles (162, 164).

4. Bandage pneumatique selon la revendication 3, **caractérisé en ce que** les premiers éléments de bourrage sur tringles (154, 155) sont construits à partir du premier élastomère qui présente une rigidité d'au moins 20 % à 50 % supérieure à celle du deuxième élastomère à partir duquel on construit les deuxièmes éléments de bourrages sur tringles (158, 159), les troisièmes éléments de bourrages sur tringles (138, 139) et les quatrièmes éléments de bourrages sur tringles (162, 164).

5. Bandage pneumatique selon la revendication 1, **caractérisé en ce qu'**il possède une structure de verrouillage réciproque (20, 70, 72, 74, 76) pour fixer l'assemblage de ceinture de bande de roulement amovible (120) à la carcasse de bandage pneumatique gonflable (114).

6. Bandage pneumatique selon la revendication 5, **caractérisé en ce que** la structure de verrouillage réciproque englobe une structure de ceinture de verrouillage réciproque (72, 74) sur la surface interne (70) de l'assemblage de ceinture de bande de roulement amovible (120) destiné à venir s'engrener dans une structure de support de verrouillage réciproque complémentaire (20, 76) sur la surface circonférentielle externe de la carcasse (114) du bandage pneumatique.

7. Bandage pneumatique selon la revendication 6, **caractérisé en ce que** la structure de bande de roulement procurant un verrouillage réciproque comprend plusieurs saillies (72) et plusieurs rainures (74) s'étendant en direction circonférentielle ; la structure de support de verrouillage réciproque comprenant plusieurs saillies (76) et plusieurs rainures (20), s'étendant en direction circonférentielle, orientées pour venir s'engrener dans des saillies (72) et dans des rainures (74) complémentaires, s'étendant en direction circonférentielle, sur la surface interne (70) de l'assemblage de ceinture de bande de roulement amovible (120) dans le but d'empêcher un mouvement axial de l'assemblage de ceinture de bande de roulement amovible (120) par rapport à la périphérie circonférentielle externe de la carcasse (114) du bandage pneumatique.

8. Bandage pneumatique selon la revendication 1, **caractérisé en ce que** l'assemblage de ceinture de bande de roulement amovible (120) englobe une portion de bande de roulement (80) entrant en contact avec le sol sur sa surface externe et plusieurs saillies 72 et rainures 74 s'étendant en direction circonférentielle, orientées pour empêcher un mouvement axial de l'assemblage de ceinture de bande de roulement amovible (120) par rapport à la périphérie circonférentielle externe de la carcasse (114) du bandage pneumatique.

9. Bandage pneumatique selon la revendication 1, **caractérisé en ce que**, lorsque le bandage pneumatique est gonflé et monté sur un rebord de jante possédant une surface interne (137) en direction radiale formant un angle (YY) inférieur à 90 degrés, la médiane 166 de la première couche de nappes de carcasse 134 suit la médiane naturelle de nappe à l'état non gonflé et est essentiellement parallèle à la surface interne en direction axiale (37) du rebord de jante.
